# EUROPEAN PATENT APPLICATION

(11) **EP 0 800 060 A2**
(43) Date of publication of application: **08.10.1997**
(21) Application number: 97105250.1
(22) Date of filing: 27.03.1997
(51) Int. Cl.: G01F 1/20

(54) **Method for the noninvasive measurement of the flow of a fluid inside tubes and apparatus for carrying out the method**

(30) Priority: 03.04.1996 IT MO960041
(71) Applicant: B. BRAUN CAREX S.p.A., 41037 Mirandola (Modena) (IT)
(72) Inventor: Ferri, Angelo, 41037 Mirandola (Prov. of Modena) (IT)
(74) Representative: Modiano, Guido, Dr.-Ing.

(57) **Abstract**

A method for the noninvasive measurement of the flow of a fluid inside tubes consisting in artificially forming at least one loop (6) in the tube (2) and in pre-tensioning the ends of the loop, determining by vector analysis, with the pre-tensioning, the value of the resulting load applied by the fluid to the tube in the centroid of the loop (6); the apparatus for carrying out the method is constituted by a footing (3) which supports a first element (4), shaped so as to duplicate the loop (6), for removably accommodating a portion of a tube (2) which is shaped like the loop (6), and a second element (7) for locking, with pre-tension, the ends of the portion of the tube; a third element (8) for sensing the load acting on the first element (4) is interposed between, and in contact with, the first element (4) and the second element (7).

## Description

The present invention relates to a method for the noninvasive measurement of the flow of a fluid inside tubes and to an apparatus for carrying out the method.

One of the many problems that industry in general and medical industry in particular often has to face is the measurement in general of a stream of fluid which, flows in tubes; in the medical field, in particular, said fluid can be blood or a medicinal solution to be infused or transfused, which passes from a container to the patient through an aseptic delivery tube.

As mentioned, this problem also affects fields other than those strictly medical; however, reference will be made to this field in the present description for the sake of convenience in exemplification, the present invention being applicable in the same manner to several additional fields of use as well.

For the measurement of said flows, probes are currently used which have a head sensitive to pressure and are inserted in the fluid, acquiring the required information therefrom.

As an alternative to the above-described method in particular applications, indeed medical ones, in which the fluid cannot be contaminated by contacts from outside since it would carry germs to the patient, measurement of the flow is performed by means of an apparatus provided with a portion of rigid tube forming a U-shaped loop and made to vibrate at preset and constant frequencies.

The detection of any variation between the values of the phases of each loop arm, induced by the flow of the fluid, provides the required flow value by means of an algorithmic (automatic) conversion of the acquired data.

This prior art has the following drawbacks: in the first case, the insertion of a sensor element in the fluid can, as mentioned, contaminate its organic characteristics, entailing possible severe danger for patients and significantly changing the acquired pressure values because of the reduction in the useful transverse passage section of the fluid, which, as known, tends to increase its own speed in order to maintain its flow-rate constant; in the second case, since the instrument being used has its own rigid detection tube, it is necessary to interrupt the fluid delivery tube and connect its ends to the corresponding ends of the loop, once again causing severe danger of contamination and of wasting time to complete said connections.

Moreover, the invasive probes are not always capable of indicating the presence of any air bubbles inside the tube; those bubbles, especially in medical use, may constitute a further danger for the safety of patients.

A principal aim of the present invention is to solve the above-described problems of the prior art by providing a method for the noninvasive measurement of the flow of a fluid inside tubes and an apparatus for carrying out the method, which allow to exactly determine the required flow values and at the same time can work directly on conventional commercial tubes, avoiding additional operations for connection and disconnection, allow to detect air in the flow of fluid, and do not require sensors to be immersed in the fluid to be measured.

This aim and other objects are achieved by a method for the noninvasive measurement of the flow of a fluid inside tubes, characterized in that it consists in artificially forming at least one loop in the tube and in pre-tensioning the ends of said loop, determining by vector analysis, with said pre-tensioning, the value of the resulting load applied by the fluid to the tube in the centroid of the loop.

Advantageously, the apparatus for carrying out the method is characterized in that it is constituted by a footing which supports a first semicircular element for detachably accommodating a portion of a tube which forms a loop and a second element for locking, with pre-tension, the ends of said portion, a third element for detecting the load which acts on said first element being interposed between, and in contact with, said shaped element and said locking element.

Further characteristics and advantages of the present invention will become apparent from the following detailed description of a preferred embodiment thereof, applied by way of example to the medical field, of an apparatus for the noninvasive measurement of the flow of a fluid inside tubes, illustrated only by way of non-limitative example in the accompanying drawings, wherein:
figure 1 is a schematic plan view of an apparatus for the noninvasive measurement of the flow of a fluid inside tubes;
figure 2 is another plan view of the apparatus according to the present invention, associated in a mirror-symmetrical manner with an identical apparatus in a possible application in a dialysis infusion circuit.

With particular reference to the above figures, the reference numeral 1 generally designates an apparatus for the noninvasive measurement of the flow of a fluid inside a conventional tube 2, for medical use in the specific case; the apparatus consists substantially of a footing 3 which supports a first semicircular element 4 which can detachably accommodate a portion 5 of the tube 2 which forms a horseshoe-shaped loop 6.

A second element 7 and a third element 8 are also fitted on the footing 3, the second element 7 being adapted to lock the ends 5a of said portion 5 so that they are slightly pre-tensioned and the third element 8 detecting the load which acts on the first element 4 and being interposed between, and in contact with, the first element 4 and the second element 7.

The first shaped element 4 is constituted by a prism-shaped body which is mounted on said footing so that it can move along the axis of symmetry A of the loop and has, in the semicircular portion, a receptacle 4a forming a groove inside which the loop 6 can be inserted.

The third detector element 8 is constituted by a so-called load cell, wherein one end 8a is in contact with the opposite side 4b of the first element 4 and the opposite end 8b is in contact with the second locking element 7.

In general, in any case, the third element 8 can also be constituted by any force transducer the functional behavior whereof is fully equivalent to the behavior of said load cell, except for more enhanced measurement precision attainable, which is inversely proportional to the value of the "work", when progressively said value tends to zero.

The locking element 7, too, is constituted by a prism-shaped body, on both sides whereof conventional clamp means 9 or of the retention type are associated; the tube 2 passes through means 9, allowing pre-tensioned clamping of its ends 5a.

Performing the method according to the present invention and operation of the apparatus are as follows: the operator places a portion of tube 2 in the appropriately provided receptacle 4a of the first element 4, bending the tube 2 so as to form a horseshoe-shaped profile.

The ends 5a are first subjected to slight traction and then locked by the clamp or retention means 9, so that the loop 6 constantly presses on the first element 4 with a force which is equal to the sum of the traction forces applied by the second clamping element 7 to said ends 5a.

The electronic logic unit which controls the operation of the third detector element 8, after recording the value of the pre-tension, stores and keeps it as initial reference for any other load variation: in practice, the pre-tensioning value becomes the zero of the measurement scale for the load cell that constitutes the third element 8 or for any force transducer equivalent to the cell and constituting said element 8.

When the flow of the fluid inside the tube 2 is activated, the tube undergoes a pressure variation on its walls, particularly on the walls of the loop 6, which modifies the measurements of the load cell 8 and, by means of appropriate algorithms, allows the cell to provide the required flow or mass flow data.

Likewise, it is possible to measure this required data when a fluid is already present and static or able to flow in the tube 2: when the pressure of the fluid reaches a constant value or, in an equivalent manner, when the flow is in the steady state, the control logic unit of the force transducer 8 (or of the equivalent load cell) automatically resets its measurement scale and, as in the previously described case in which the tube 2 is initially empty, is ready to detect any pressure variation (Δ P) which modifies the constancy of the value taken as "zero" for the scale.

If air bubbles are present in the fluid, the change in the intensity of the force on the inside walls of the tube 2 caused by the passage of the bubbles in the loop 6 is detected by the cell 8, which warns the operator with an appropriate indication.

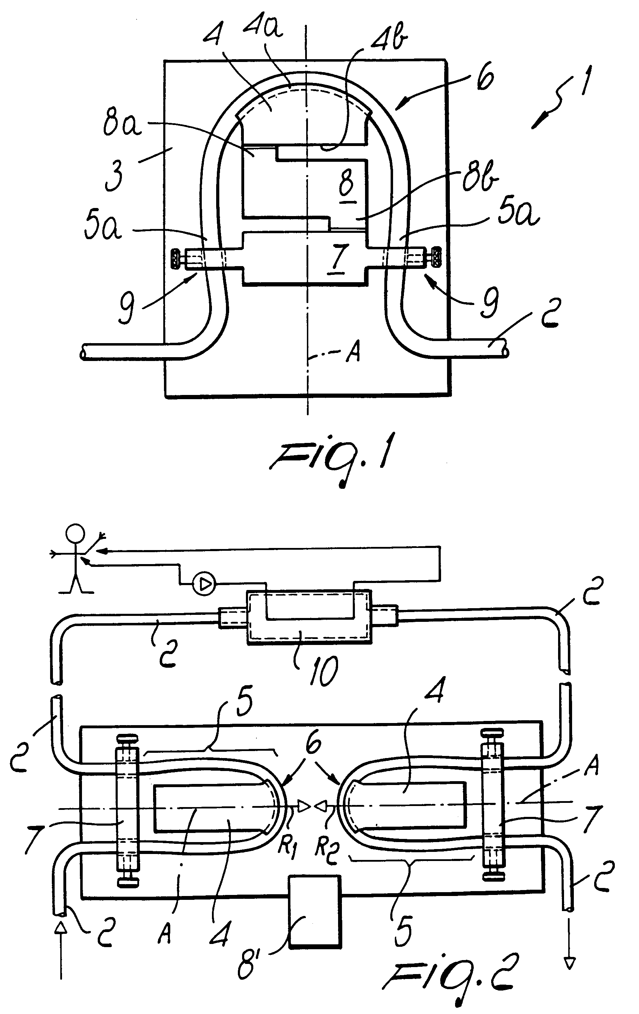

It should also be noted that for particular uses it is possible to combine two identical apparatuses 1, connecting them as shown in figure 2 with a circuit, for example for dialysis, wherein the third detector element 8 is shared and is designated by the reference numeral 8' and the tubes 2 originate from a conventional supply source of a fresh liquid and, after passing through a filter 10 usually connected to a patient, they continue to a discharge for the used liquid: the determination of the "mass flow" data of the fluid (in this case a dialysis bath fluid) is performed by vector subtraction between the resultants R₁ and R₂ which act on the opposite loops of the two apparatuses 1.

It has thus been shown that the described invention achieves the intended aim and objects, i.e., that it allows to determine the flow or mass flow through a tube without interfering with the flow and without having to perform connections to fixed devices.

The invention thus conceived is susceptible of numerous modifications and variations, all of which are within the scope of the inventive concept.

All the details may also be replaced with other technically equivalent elements.

In the practical execution of the invention, the materials employed, as well as the shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for the noninvasive measurement of the flow of a fluid inside tubes, characterized in that it consists in artificially forming at least one loop in the tube and in pre-tensioning the ends of said loop, determining by vector analysis, with said pre-tensioning, the value of the resulting load applied by the fluid to the tube in the centroid of the loop.

2. An apparatus for performing the method according to claim 1, characterized in that it is constituted by a footing which supports a first element shaped like said loop for removably accommodating a portion of a tube which is shaped like the loop and a second element for locking, with pre-tension, the ends of said portion, a third element for sensing the load which acts on said first element being interposed between, and in contact with, said shaped element and said locking element.

3. An apparatus according to claim 2, characterized in that said first shaped element is constituted by a prism-shaped body which is fitted so that it can move on said footing and has, in the shaped portion, a receptacle which forms a groove inside which the tube can be inserted.

4. An apparatus according to claim 2, characterized in that said third sensing element can be self-calibrated to a reference value as a function of said pre-tensioning of the ends of the portion of tube which forms the loop and/or of a constant pressure value of a fluid which is statically contained in said tube or flows therein.

5. An apparatus according to claims 2 and 4, characterized in that said third sensing element is constituted by a force transducer the work whereof tends to zero.

6. An apparatus according to claim 5, characterized in that said force transducer is constituted by a load cell in which one end is in contact with the opposite end of said first element and the other end of said load cell is in contact with said second locking element.

7. An apparatus according to claim 2, characterized in that said second locking element is constituted by a prism-shaped body, on both sides whereof conventional clamp and/or retention means are associated for the passage and locking of the ends of the portion of tube forming the loop.

8. An apparatus according to claim 2, characterized in that said loop is U-shaped.

9. An apparatus according to claim 2, characterized in that a plurality of loops are defined in said tubes, said loops being arranged in a plurality of contiguous and concentric turns.
